# EUROPEAN PATENT APPLICATION

(11) **EP 3 712 511 A1**
(43) Date of publication of application: **23.09.2020**
(21) Application number: 19164546.4
(22) Date of filing: 22.03.2019
(51) Int. Cl.: F24D 10/00, F24D 19/10

(54) **CONTROL FOR SUPERVISING COMMUNICATION BETWEEN A CENTRAL SERVER AND A LOCAL CONTROL OF THERMAL DEVICE BEING PART IN A HEAT OR COOL DISTRIBUTING NETWORK**

(71) Applicant: E.ON Sverige AB, 205 09 Malmö (SE)
(72) Inventor: LINDOFF, Bengt, 237 35 Bjärred (SE); ROSÉN, Per, 227 33 Lund (SE); SKOGSTRÖM, Jacob, 234 42 Lomma (SE); ROSENQVIST, Fredrik, 254 51 Helsingborg (SE)
(74) Representative: AWA Sweden AB

(57) **Abstract**

Disclosed is a control unit (206) configured to control an outtake of heat and/or cold of a thermal device (106) from a distribution grid (202) for a fluid based distribution of heat and/or cold. The control unit (206) comprising: a communication unit (302) configured to communicate with a central (208) server using a predetermined rule of communication; a control circuit (304) configured to execute: a monitoring function (310) configured to monitor the communication between the control unit (206) and the central server (208); a mode setting function (312) configured to: upon the communication between the control unit (206) and the central server (208) fulfills the predetermined rule of communication, set the thermal device (106) in a normal operation mode, upon the communication between the control unit (206) and the central server (208) does not fulfill the predetermined rule of communication, set the thermal device (106) in a limited operation mode, wherein the limited operation mode is more restricted than the normal operation mode, wherein in the normal operation mode the thermal device (106) is allowed to freely take out heat and/or cold from the distribution grid (202), wherein in the limited operation mode the thermal device (106) is restricted to take out heat and/or cold from the distribution grid (202) below a preconfigured threshold.

## Description

### Field of the invention

The invention relates to how to control an outtake of heat and/or cold of a thermal device.

### Background of the invention

Today, it is common practice in many parts of the world to provide heating and hot water for houses and buildings via an energy grid. One example of such energy grid is a district heating grid comprising a system of conduits and valves for distributing hot water to the houses and buildings such that the houses can be heated when needed via thermal devices, i.e. heat exchangers, connected to the district heating grid. Alternatively, according to another example, instead of using hot water for providing space heating, gas may be provided to the houses and buildings via the system. By having access to gas, typically a fossil fuel gas, the houses can be heated by using a thermal device in the form of a gas burner. In addition to space heating, the hot water or the gas may be used for preparing hot tap water.

To cool the houses and buildings, similar systems may be used. The general principle of these systems is however the opposite. Instead of providing heat by e.g. providing hot water, heat is collected in the houses and transported away from the houses. District cooling grids, that is, networks of conduits and valves connecting several real estates for cooling purposes, using water as heat carrier are however still rare. The common practice is instead to use electrical energy for running air conditioning systems, which is a disadvantage at least from an environmental perspective.

Even if it is known how to add and control thermal devices, e.g. heat exchanges or heat pumps, to distribution systems once new buildings are built, these can be further improved. One area of improvement is efficient system maintenance. For instance, the prior art does not offer any solutions for detecting problems between the different thermal devices and the whole system. This would improve the overall performance of the system.

### Summary of the invention

It is an object of the present invention to solve at least some of the problems mentioned above.

According to a first aspect, a control unit configured to control an outtake of heat and/or cold of a thermal device from a distribution grid for a fluid based distribution of heat and/or cold is provided. The control unit comprising a communication unit and a control circuit. The communication unit is configured to communicate with a central server using a predetermined rule of communication. The control circuit is configured to execute a monitoring function and a mode setting function. The monitoring function is configured to monitor the communication between the control unit and the central server. The mode setting function is configured to: upon the communication between the control unit and the central server fulfills the predetermined rule of communication, set the thermal device in a normal operation mode, or upon the communication between the control unit and the central server does not fulfill the predetermined rule of communication, set the thermal device in a limited operation mode. The limited operation mode is more restricted than the normal operation mode. In the normal operation mode, the thermal device may be allowed to freely take out heat and/or cold from the distribution grid. In the limited operation mode, the thermal device may be restricted to take out heat and/or cold from the distribution grid below a preconfigured threshold.

As long as the communication works as expected, the control unit may set the thermal device to operate in the normal operation mode, e.g., the thermal device is allowed to freely take out heat and/or cold from the distribution grid. By the present control unit, while the communication works as expected, the central server has control over the thermal device and can therefore optimize the energy efficiency of the distribution grid and the thermal devices connected thereto. By using different operation modes, e.g., the normal operation mode and the limited operation mode, the central server can keep control of how much outtake of heat and/or cold that is taken out from the distribution system. Thus, this can secure good overall performance of the whole thermal energy distribution system comprising the distribution grid and the thermal devices connected thereto. This may also improve the detection of which thermal device that may have problems with the communication between the thermal device and the central server.

The predetermined rule of communication may be a ping communication. Ping measures the round-trip time for messages sent from the originating host to a destination computer that are echoed back to the source. The ping communication may be performed periodically. The term "periodically" refers to that the ping communication is performed recurrently, e.g., once a minute, once an hour, once a day or once a week.

In the normal operation mode, the thermal device may be controllable by the central server. Hence, the central server may send control instructions to the control unit controlling the thermal device.

According to a second aspect, it is provided a method for controlling an outtake of heat and/or cold of a thermal device from a distribution grid for a fluid based distribution of heat and/or cold. The method comprising:
monitoring a communication between the thermal device and a central server; and
upon the communication fulfills a predetermined rule of communication, setting the thermal device in a normal operation mode; or
upon the communication does not fulfill the predetermined rule of communication, setting the thermal device in a limited operation mode. The limited operation mode is more restricted than the normal operation mode.

In the normal operation mode, the thermal device may be allowed to freely take out heat and/or cold from the distribution grid. In the limited operation mode, the thermal device may be restricted to take out heat and/or cold from the distribution grid below a preconfigured threshold. In the normal operation mode, the thermal device may be controllable by the central server.

The above mentioned features of the first aspect, when applicable, apply to this second aspect as well. In order to avoid undue repetition, reference is made to the above.

According to a third aspect, a central server configured to control a controllability of a thermal device connected to a distribution grid for a fluid based distribution of heat and/or cold is provided. The central server comprising a communication unit and a control circuit. The communication unit is configured to communicate with the thermal device using a predetermined rule of communication. The control circuit is configured to execute a monitoring function and a thermal device control function. The monitoring function is configured to monitor the communication between the central server and the thermal device. The thermal device control function is configured to: upon the communication between the central server and the thermal device fulfills the predetermined rule of communication, set the thermal device in a normal operation mode; or upon the communication between the central server and the thermal device does not fulfill the predetermined rule of communication, trigger an alarm indicating a problem with the communication between the central server and the thermal device.

The predetermined rule of communication may be a ping communication. The ping communication may be performed periodically.

The central server may further comprise a database. The control circuit may be configured to execute a register function. The register function is configured to, in the database, indicate the controllability of the thermal device.

The communication unit may be configured to communicate with a plurality of thermal devices using a predetermined rule of communication. The monitoring function may be configured to monitor the communications between the central server and the plurality of thermal devices. The thermal device control function may be configured to, for each of the plurality of thermal devices, determine whether the communication between the central server and the respective one of the plurality of thermal devices fulfills the predetermined rule of communication. The thermal device control function may upon the communication between the central server and a respective one of the plurality of thermal devices fulfills the predetermined rule of communication, set the respective one of the plurality of thermal devices in a normal operation mode; or upon the communication between the central server and the respective one of the plurality of thermal devices does not fulfill the predetermined rule of communication, trigger an alarm indicating a problem with the communication between the central server and the respective one of the plurality of thermal devices.

The register function may further be configured to, in the database, indicate the controllability of each of the plurality of thermal devices.

The above mentioned features of the first and second aspects, when applicable, apply to this third aspect as well. In order to avoid undue repetition, reference is made to the above.

According to a fourth aspect, it is provided a method for checking controllability of a thermal device connected to a distribution grid for a fluid based distribution of heat and/or cold. The method comprising: monitoring a communication between a central server and the thermal device; and upon the communication between the central server and the thermal device fulfills a predetermined rule of communication, setting the thermal device in a normal operation mode, or upon the communication between the central server and the thermal device does not fulfill the predetermined rule of communication, triggering an alarm indicating a problem with the communication between the central server and the thermal device.

The above mentioned features of the first, second and third aspects, when applicable, apply to this fourth aspect as well. In order to avoid undue repetition, reference is made to the above.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an, " "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

These and other aspects of the present invention will now be described in more detail, with reference to the appended drawings showing embodiments of the invention. The figures are provided to illustrate the general structures of embodiments of the present invention. Like reference numerals refer to like elements throughout.
Fig. 1 is a schematic diagram of a distribution system for distributing thermal energy.
Fig. 2 illustrates communication connections between thermal devices of the distribution system of Fig. 1 and a central server.
Fig. 3 is a schematic diagram of a central server configured to control a controllability of a thermal device connected to a distribution grid.
Fig. 4 is a flow chart illustrating a method for checking controllability of a thermal device connected to a distribution grid.
Fig. 5 is a schematic diagram of a control unit configured to control an outtake of heat and/or cold of a thermal device from a distribution grid.
Fig. 6 is a flow chart illustrating a method for controlling an outtake of heat and/or cold of a thermal device from a distribution grid.

### Detailed description

The present invention will now be described more fully hereinafter with reference to the accompanying drawings, in which currently preferred embodiments are the invention are shown. This invention may, however, be embodied in many different forms and should not be construed as limited to the embodiments set forth herein; rather, these embodiments are provided for thoroughness and completeness, and to fully convey the scope of the invention to the skilled person.

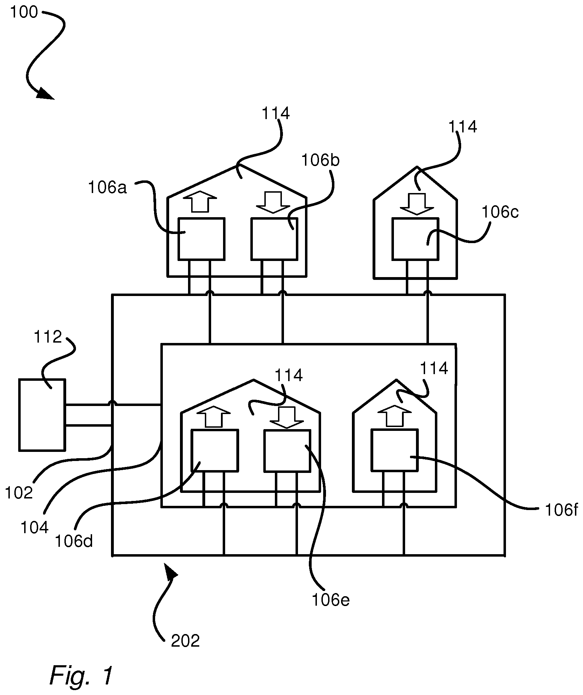

Fig. 1 generally illustrates a distribution system 100 for distributing thermal energy. The distribution system 100 comprises a thermal server plant 112 and a plurality of thermal devices 106a-f. The distribution system 100 may comprise more than one thermal server plant 112. One or more thermal devices 106 are located in a respective building 114. The building 114 may be any type of building suitable for connection to the distribution system 100, such as a residential building, commercial or office building, an apartment building, a free-standing house or an industrial building. The distribution system 100 may be a district heating system or a district cooling system known in the art. The district heating system (or a district cooling system) may comprise a supply conduit 102 providing heating (or cooling) medium from the thermal server plant 112 and a return conduit 104 which transport cooled heating medium (or heated cooling medium) to the thermal server plant 112. The heating (or cooling) medium may be any fluid suitable for heating (or cooling) at the thermal server plant 112 and transported by means of the supply conduit 102 and the return conduit 104, such as water. The heating (or cooling) medium will henceforth be referred to as "thermal fluid". The thermal server plant 112 may be a geothermal plant, an electrically powered plant for heating (or cooling) fluids, or may be driven by combustion of fuels, such as gas or oil. The thermal server plant 112 is configured to heat (or cool) the heating (or cooling) medium and pump it through the distribution system 100. As an alternative to being a district heating or district cooling system, the distribution system 100 may be a combined district heating and cooling system as previously disclosed in, e.g., WO 2017/076868 filed by E.ON Sverige AB. In such as case the two conduits 102 and 104 are not to be seen as supply and return conduits but instead to be seen as a hot conduit and a cold conduit, wherein the hot conduit is configured to hold thermal fluid being warmer than the thermal fluid of the cold conduit.

Hence, the distribution system 100 comprises a distribution grid 202 having two conduits 102, 104 for distributing thermal energy to thermal devices 106 connected to the distribution grid. The thermal devices 106 being part of the distribution system 100. The thermal devices 106 being configured to extract heat from the thermal fluid of distribution grid and/or deposit heat in the thermal fluid of the distribution grid 202. Hence, each of the thermal devices 106 is configured to distribute heating and/or cooling inside a building 114. Each of the thermal devices 106 can serve one building 114 or a plurality of buildings 114. A specific building may comprise one thermal device 106. A specific building may comprise more than one thermal device 106.

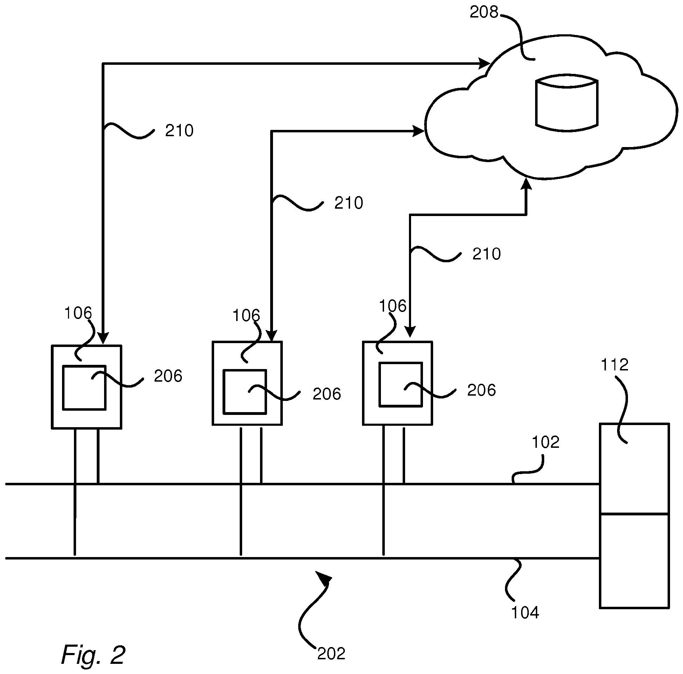

Fig. 2 illustrates a portion of the distribution system 100 of Fig. 1. In addition to what has been discussed above each thermal device 106 is controlled by a control unit 206. Hence, the distribution system 100 comprises a plurality of control units 206. Each control unit 206 is configured to control at least one thermal device 106. Each thermal device 106 may comprise a control unit 206 configured to control the thermal device 106. The control unit 206 is configured to control an outtake of heat of the thermal device 106, it is configured to control, from the distribution grid 202. Alternatively, or in combination, the control unit 206 is configured to control an outtake of cold of the thermal device 106, it is configured to control, from the distribution grid 202.

A specific thermal device 106 may be a thermal energy consumer assembly, a thermal energy generator assembly, or a combined thermal energy consumer/generator assembly. A thermal energy consumer assembly is configured to extract heat from the distribution grid 202. Hence, the thermal energy consumer assembly is configured to take out heat from the distribution grid 202 and deposit the same in a heating system of a building. The heating system may comprise a comfort heating system, a process heating system and/or a tap hot water system. The thermal energy consumer assembly may comprise a heat exchanger and/or a heat pump configured to extract heat from the distribution grid 202. A thermal energy generator assembly is configured to extract cold from the distribution grid 202. Hence, the thermal energy generator assembly is configured to take out heat from a building using a cooling system and deposit the same in the distribution grid 202. The cooling system may comprise a comfort cooling system, a refrigerator system, a freezing system and/or a process cooling system. The thermal energy generator assembly may comprise a heat exchanger and/or a heat pump configured to extract heat from the building. A combined thermal energy consumer/generator assembly is an assembly that is configured to sometimes act as a thermal energy generator assembly and some other times act as a thermal energy consumer assembly. An example of a combined thermal energy consumer/generator assembly is disclosed in, e.g., EP18172779 filed by E.ON Sverige AB.

The distribution system 100 further comprises a central server 208. The central server 208 is configured to communicate with the plurality of control units 206. The communication may be wired or wireless. The communication may be performed using any suitable communication protocol. Such communication is well known to a person skilled in the art and will not be described in any detail herein. The central server 208 is configured to send control messages to the plurality of control units 206. A control message may comprise information pertaining to time resolved outtake of heat and/or cold from the distribution grid 202. For example, information pertaining to a time resolved maximum outtake of heat and/or cold from the distribution grid 202 or information pertaining to a time resolved minimum outtake of heat and/or cold from the distribution grid 202.

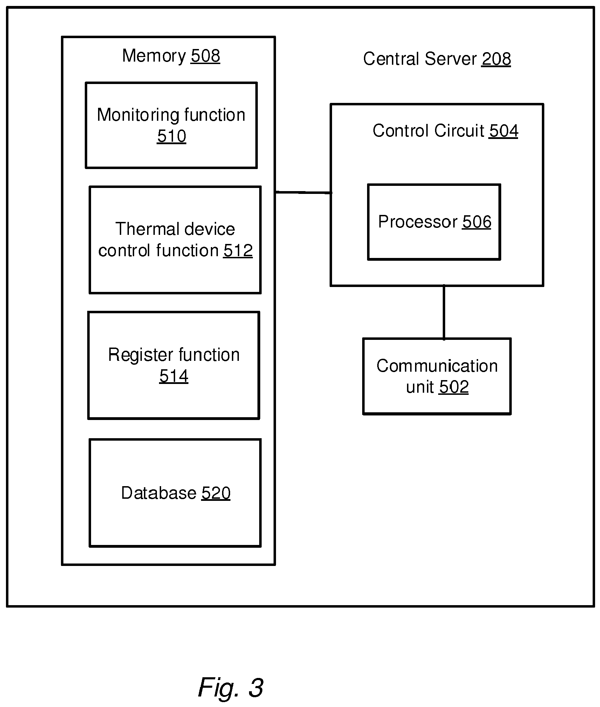

In connection with Fig. 3 the central server 208 will be discussed in more detail. The central server 208 comprises a communication unit 502, a control circuit 504 and a memory 508.

The central server 208 is configured to control a controllability of thermal devices 204 connected to the distribution grid 100. The central server 208 is configured to control a controllability of a thermal device 106 by checking whether a communication path 210 between the central server 208 and a control unit 206 controlling the thermal device 106 is open. A communication path 210 may, as in the in Fig. 2 shown example, be bidirectional, i.e. both the central server 208 and the control unit 206 can initiate a communication on the communication path 210. Alternatively, the communication path 210 may be unidirectional, i.e. the central server 208 but not the control unit 206 can initiate a communication on the communication path 210. The checking of whether a communication path 210 between the central server 208 and a control unit 206 is open may be performed by monitoring if the communication between the central server 208 and the control unit 206, i.e. monitoring the communication between the central server 208 and the thermal device 106, fulfills a predetermined rule of communication.

The predetermined rule of communication may be a ping communication. The ping communication may be performed periodically, i.e. performed recurrently, e.g., once a minute, once an hour, once a day or once a week. Many different kind of ping communications exist and will not be listed here. Basically, using a ping communication, the central server 208 may send a request message to the control unit 206. Upon the control unit 206 receive the request message, the control unit 206 may send a response message back to the central server 208. Upon the control unit 206 receive the request message, it is an indication that the central server 208 may initiate a communication with the control unit 206. The central server 208 may hence send control messages to the control unit 206. Accordingly, using the ping communication as the predetermined rule of communication it is made possible to check whether the central server 208 can send information to the control unit 206. Also a quality of a communication path 210 between the central server 208 and the control unit 206 may be checked using a ping communication. The central server 208 may be configured to initiate the ping communication. By such a ping communication it may be checked whether the central server 208 may open a communication with the control unit 206. Using such a communication the central server 208 may, e.g., send control instructions to the control unit 206. Alternatively, or in combination, the control unit 206 may be configured to initiate a ping communication. By such a ping communication it may be checked whether the control unit 206 may open a communication with the central server 208. Using such a communication the control unit 206 may, e.g., report information to the central server 208.

The ping communication may be encrypted. As a non-limited example, the transmission from the central sever208 may comprise of an encryption key. The control unit 206 may send a response encryption key/message in accordance to the received encryption key. The central server 208 then receives the response message.! In case the response message is in accordance to the transmitted encryption key, the central server 208 may determine that the communication fulfills the predetermined rule of communication. In response thereto the central server 208 may inform the control unit 206 to set the thermal device 106 in a normal operation mode. The normal operation mode will be discussed in more detail below. In case the response message is not in accordance to the transmitted encryption key, the central sever 208 may determine that the communication does not fulfill the predetermined rule of communication. In response thereto the central server 208 may issue an alarm. The issuance of the alarm will be discussed in more detail below, Using encrypted ping communication, the central server may not only check that the communication itself is ok, but also that no one has modified the control unit 206 in the thermal device 106.

The communication unit 502 is configured to communicate with the plurality of control units 206 controlling the thermal device 106. The communication path 210 over which the communication is made may be wired or wireless. The communication may include data transfers, and the like. Data transfers may include, but are not limited to, downloading and/or uploading data and receiving or sending messages. The data may be processed by the central server 208 and/or the control unit 206. The processing may include storing the data in a memory, e.g. the memory 508 of the central server 208, executing operations or function, and so forth. The communication may be individual for each control unit 206. Especially, the communication unit 502 is configured to communicate with each of the plurality of control units 206 using a predetermined rule of communication. The predetermined rule of communication may be the same for each control unit 206. Alternatively, the predetermined rule of communication may be different for the communication with at least some of the control units 206. As mentioned above, the predetermined rule of communication may be a ping communication initiated by the central server 208. Hence, the communication unit 502 of the control server 208 may be configured to initiate a ping communication with a control unit 206 controlling a thermal device 106.

The control circuit 504 is configured to carry out overall control of functions and operations of the central server 208. The control circuit 504 may include a processor 506, such as a central processing unit (CPU), microcontroller, or microprocessor. The processor 506 is configured to execute program code stored in the memory 508, in order to carry out functions and operations of the central server 208.

The memory 508 may be one or more of a buffer, a flash memory, a hard drive, a removable media, a volatile memory, a non-volatile memory, a random access memory (RAM), or another suitable device. In a typical arrangement, the memory 508 may include a non-volatile memory for long term data storage and a volatile memory that functions as system memory for the control circuit 504. The memory 508 may exchange data with the control circuit 504 over a data bus. Accompanying control lines and an address bus between the memory 508 and the control circuit 504 also may be present.

Functions and operations of the central server 208 may be embodied in the form of executable logic routines (e.g., lines of code, software programs, etc.) that are stored on a non-transitory computer readable medium (e.g., the memory 508) of the central server 208 and are executed by the control circuit 504 (e.g., using the processor 506). Furthermore, the functions and operations of the central server 208 may be a stand-alone software application or form a part of a software application that carries out additional tasks related to the central server 208. The described functions and operations may be considered a method that the corresponding device is configured to carry out. Also, while the described functions and operations may be implemented in software, such functionality may as well be carried out via dedicated hardware or firmware, or some combination of hardware, firmware and/or software.

The control circuit 504 is configured to execute a monitoring function 510. The monitoring function 510 is configured to monitor the communication between the central server 208 and a control unit 206, i.e. it may be said that the monitoring function 510 is configured to monitor the communication between the central server 208 and a thermal device 204. The monitoring function 510 may be configured to individually monitor the communications between the central server 208 and the plurality of control units 206. Especially, the monitoring function 510 may be configured to monitor a communication between the central server 208 and a control unit 206 to check whether the communication is made using the predetermined rule of communication.

The control circuit 504 is further configured to execute a thermal device control function 512. Upon the communication between the central server 208 and the control unit 206, i.e. the thermal device 106, fulfills the predetermined rule of communication, the thermal device control function 512 is configured to control the thermal device 106 such that it is set in a normal operation mode. This may e.g. be made by sending, using the communication unit 502, a control message to the control unit 206. The control message may comprise instructions for the control unit 206 to set the thermal device 106 in the normal operation mode. Additionally, the control message may comprise instructions to check if the thermal device 106 is already set in the normal mode and if not set the thermal device 106 in the normal operation mode. Upon the communication between the central server 208 and the control unit 206 does not fulfill the predetermined rule of communication, the thermal device control function 512 is configured to trigger an alarm. The alarm indicating a problem with the communication between the central server 208 and the control unit 206 controlling the thermal device 106. The alarm may be sent to a client monitoring the distribution system 100.

The central server 208 may comprise a database 520. The control circuit 504 may further be configured to execute a register function 514. The register function 514 is configured to, in the database 520, indicate the controllability of the thermal device 106. The register function 514 may further be configured to, in the database 520, indicate the controllability of each of the plurality of thermal devices 204 of the distribution system 100. Accordingly, the database 520 may comprise entries of the thermal devices 106 of the distribution system 100 and an indication for each thermal device 106 whether the central server 208 can initiate a communication with the control unit 206 controlling the respective thermal device 106.

Hence, by analyzing the ability for the central server 208 to initiate a communication with a control unit 206, the central server 208 may control the controllability of the control unit 206, i.e. the controllability of the thermal device 106. The analysis is based on if the communication between the central server 208 and the control unit 206 fulfills the predetermined rule of communication.

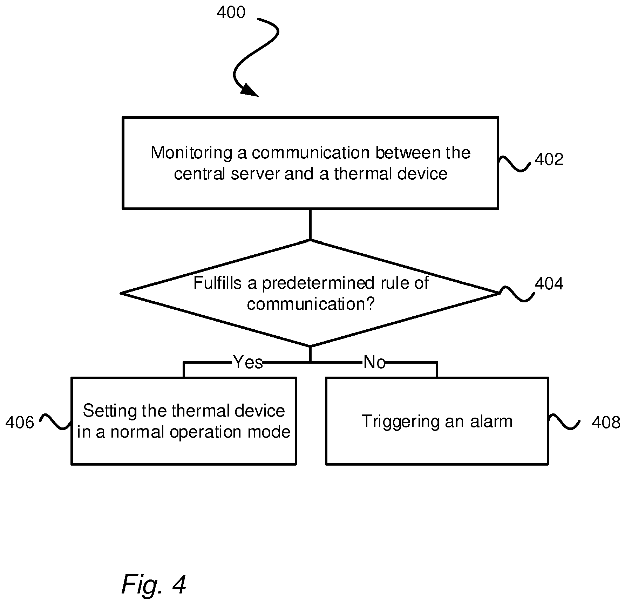

In connection with Fig. 4 a method 400 for checking controllability of a thermal device 106 connected to the distribution grid 100 will be discussed. The method 400 comprises the following steps. The steps of the method 400 may be performed in any order suitable.

Monitoring 402 a communication between the central server 208 and a control unit 206 controlling a thermal device 106. Hence, it may be said that the monitoring 402 is made for a communication between the central server 208 and a thermal device 106. Upon the communication between the central server 208 and the thermal device 106 fulfills 404 a predetermined rule of communication, setting 406 the thermal device 106 in a normal operation mode. In the normal operation mode, the thermal device 106 may be controllable by the central server 208. Upon the communication between the central server 208 and the thermal device 106 does not fulfill 404 the predetermined rule of communication, triggering 408 an alarm. The alarm indicating a problem with the communication between the central server 208 and the thermal device 106.

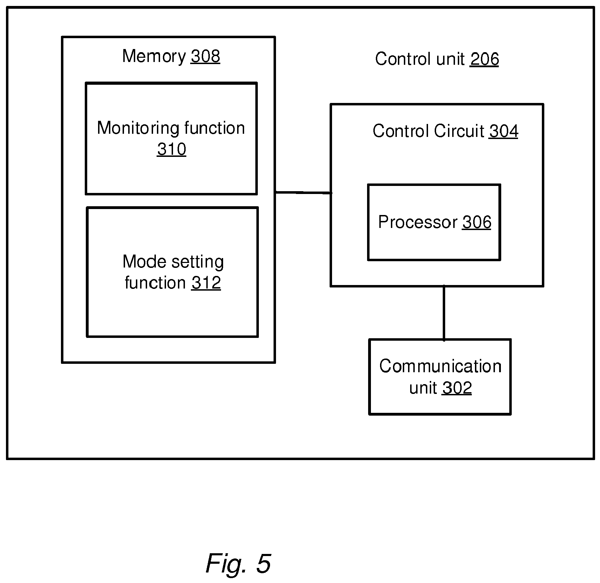

In connection with Fig. 5 a control unit 206 configured to control a thermal device 106 will be discussed in more detail. The control unit 206 comprises a communication unit 302, a control circuit 304 and a memory 308.

The communication unit 302 is configured to communicate with the central server 208. The communication path 210 over which the communication is made may be wired or wireless. The communication may include data transfers, and the like. Data transfers may include, but are not limited to, downloading and/or uploading data and receiving or sending messages. The data may be processed by the control unit 206 and/or the central server 208. The processing may include storing the data in a memory, e.g., the memory 308 of the control unit 206, executing operations or function, and so forth.

The control circuit 304 is configured to carry out overall control of functions and operations of the control unit 206. The control circuit may include a processor 306, such as a central processing unit (CPU), microcontroller, or microprocessor. The processor 306 is configured to execute program code stored in the memory 308, in order to carry out functions and operations of the control unit 206.

The memory 308 may be one or more of a buffer, a flash memory, a hard drive, a removable media, a volatile memory, a non-volatile memory, a random access memory (RAM), or another suitable device. In a typical arrangement, the memory 308 may include a non-volatile memory for long term data storage and a volatile memory that functions as system memory for the control circuit 304. The memory 308 may exchange data with the control circuit 304 over a data bus. Accompanying control lines and an address bus between the memory 308 and the control circuit 304 also may be present.

Functions and operations of the control unit 206 may be embodied in the form of executable logic routines (e.g., lines of code, software programs, etc.) that are stored on a non-transitory computer readable medium (e.g., the memory 308) of the control unit 206 and are executed by the control circuit 304 (e.g., using the processor 306). Furthermore, the functions and operations of the control unit 206 may be a stand-alone software application or form a part of a software application that carries out additional tasks related to the control unit 206. The described functions and operations may be considered a method that the corresponding device is configured to carry out. Also, while the described functions and operations may be implemented in software, such functionality may as well be carried out via dedicated hardware or firmware, or some combination of hardware, firmware and/or software.

The control circuit 304 is configured to execute a monitoring function 310. The monitoring function 310 is configured to monitor the communication between the control unit 206 and the central server 208.

The control circuit 304 is further configured to execute a mode setting function 312. The mode setting function 312 is configured to determine whether the communication between the control unit 206 and the central server 208 fulfills a predetermined rule of communication. The predetermined rule of communication was discussed above in connection with the discussion of the central server in Fig. 3 and will not be repeated here.

Upon the communication between the control unit 206 and the central server 208 fulfills the predetermined rule of communication, the mode setting function 312 is configured to set the thermal device 106 in a normal operation mode. Upon the thermal device 106 is set to operate in the normal operation mode, the thermal device 106 may be allowed to freely take out heat and/or cold from the distribution grid 100. Upon the thermal device 106 is set to operate in the normal operation mode, the thermal device 106 may be controllable by the central server 208.

Upon the communication between the control unit 206 and the central server 208 does not fulfill the predetermined rule of communication, the mode setting function 312 is configured to set the thermal device 106 in a limited operation mode. The limited operation mode is more restricted than the normal operation mode. Upon the thermal device 106 is set to operate in the limited operation mode, the thermal device 106 is restricted to take out heat and/or cold from the distribution grid 202 below a preconfigured threshold. The preconfigured threshold may be different for different thermal devices 106. The preconfigured threshold may be set to zero. Hence, upon being set to operate in the limited operation mode, the thermal device 106 may be forbidden to take out heat and/or cold from the distribution grid 202. In other examples, the preconfigured threshold may be set to a percentage of = max heat or cold outtake, e.g., 20%, 30%, 40%, 50% of max heat or cold outtake. In yet another example, the limited operation mode may be that the thermal device 106 is only allowed to out take one of heat or cold, possibly with an outtake below a preconfigured threshold (e.g. 20%, 30%, 40%, 50% of max heat or cold outtake.

Hence, by analyzing the communication between the control unit 206 and the central server 208, the control unit 206 may be configured to set the thermal device 106 in a normal operation mode or in a limited operation mode. The limited operation mode is more restricted than the normal operation mode. In case the central server 208 may initiate a communication with the control unit 206, the control unit 206 is allowed to set the thermal device 106, it is controlling, in the normal operation mode. In case, for some reason, the central server 208 may not initiate a communication with the control unit 206, the control unit 206 is configured to set the thermal device 106, it is controlling, in the limited operation mode.

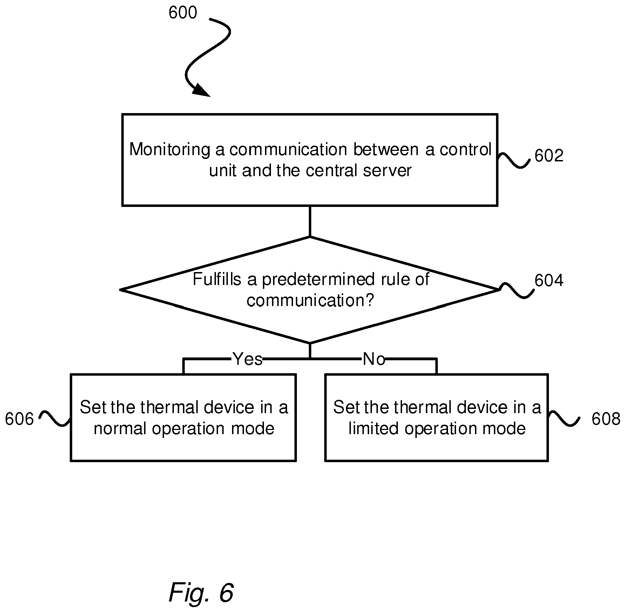

In connection with Fig. 6 a method 600 for controlling an outtake of heat and/or cold of a thermal device 106 from a distribution grid 202 will be discussed. The method 600 comprises the following steps. These steps of the method 600 may be performed in any order suitable. Monitoring 602 a communication between a control unit 206 controlling the thermal device 106 and a central server 208. Upon the communication fulfills 604 a predetermined rule of communication, setting 606 the thermal device 106 in a normal operation mode. Upon the communication does not fulfill 604 the predetermined rule of communication, setting 608 the thermal device in a limited operation mode. The limited operation mode is more restricted than the normal operation mode. In the normal operation mode, the thermal device 106 may be allowed to freely take out heat and/or cold from the distribution grid 202. In the limited operation mode, the thermal device 106 may be restricted to take out heat and/or cold from the distribution grid 202 below a preconfigured threshold. In the normal operation mode, the thermal device 106 may be controllable by the central server 208 via the control unit 206.

The person skilled in the art realizes that the present invention by no means is limited to the preferred embodiments described above. On the contrary, many modifications and variations are possible within the scope of the appended claims.

For example, the central server 208 may be embodied as a single server device having all the functionality of the central server 208. Alternatively, the central server 208 may be a distributed device having different functionality in different devices.

Further, setting the thermal device (106) in the limited operation mode may be made after a certain amount of time has passed since the communication between the control unit (206) and the central server (208) does not fulfill the predetermined rule of communication. Hence, a delay in setting the thermal device (106) in the limited operation mode may be used. The certain amount of time, i.e. the delay time, may be in the range of 5 minutes to 2 hours. During the delay time, the communication between the control unit (206) and the central server (208) may be check in order to avoid entering the limited operation mode upon the communication will again fulfill the predetermined rule of communication.

Additionally, variations to the disclosed embodiments can be understood and effected by the skilled person in practicing the claimed invention, from a study of the drawings, the disclosure and the appended claims.

## Claims

1. A control unit (206) configured to control an outtake of heat and/or cold of a thermal device (106) from a distribution grid (202) for a fluid based distribution of heat and/or cold, the control unit (206) comprising:
a communication unit (302) configured to communicate with a central server (208) using a predetermined rule of communication;
a control circuit (304) configured to execute:
a monitoring function (310) configured to monitor the communication between the control unit (206) and the central server (208);
a mode setting function (312) configured to:
upon the communication between the control unit (206) and the central server (208) fulfills the predetermined rule of communication, set the thermal device (106) in a normal operation mode,
upon the communication between the control unit (206) and the central server (208) does not fulfill the predetermined rule of communication, set the thermal device (106) in a limited operation mode,
wherein the limited operation mode is more restricted than the normal operation mode

2. The control unit (206) according to claim 1, wherein in the normal operation mode, the thermal device (106) is allowed to freely take out heat and/or cold from the distribution grid (202)

3. The control unit (206) according to claim 1 or 2, wherein in the limited operation mode, the thermal device (106) is restricted to take out heat and/or cold from the distribution grid (202) below a preconfigured threshold.

4. The control unit (206) according to any one of claims 1-3, wherein the predetermined rule of communication is a ping communication with a periodicity.

5. The control unit (206) according to any one of claims 1-4, wherein in the normal operation mode, the thermal device (106) is controllable by the central server (208).

6. A method for controlling an outtake of heat and/or cold of a thermal device (106) from a distribution grid (202) for a fluid based distribution of heat and/or cold, the method comprising:
monitoring (602) a communication between the thermal device (106) and a central server (208);
upon the communication fulfills (604) a predetermined rule of communication, setting (606) the thermal device (106) in a normal operation mode,
upon the communication does not fulfill (604) the predetermined rule of communication, setting (608) the thermal device (106) in a limited operation mode,
wherein the limited operation mode is more restricted than the normal operation mode

7. The method according to claim 6, wherein in the normal operation mode, the thermal device (106) is allowed to freely take out heat and/or cold from the distribution grid (202).

8. The method according to claim 6 or 7, wherein in the limited operation mode, the thermal device (106) is restricted to take out heat and/or cold from the distribution grid (202) below a preconfigured threshold.

9. The method according to any one of claims 6-8, wherein in the normal operation mode, the thermal device (106) is controllable by the central server (208).

10. A central server (208) configured to control a controllability of a thermal device (106) connected to a distribution grid (202) for a fluid based distribution of heat and/or cold, the central server (208) comprising:
a communication unit (502) configured to communicate with the thermal device (106) using a predetermined rule of communication;
a control circuit (504) configured to execute:
a monitoring function (510) configured to monitor the communication between the central server and the thermal device;
a thermal device control function (512) configured to:
upon the communication between the central server (208) and the thermal device (106) fulfills the predetermined rule of communication, set the thermal device (106) in a normal operation mode,
upon the communication between the central server (208) and the thermal device (106) does not fulfill the predetermined rule of communication, trigger an alarm indicating a problem with the communication between the central server (208) and the thermal device (106).

11. The central server (208) according to claim 10, wherein the predetermined rule of communication is a ping communication with a periodicity.

12. The central server (208) according to claim 10 or 11, wherein the central server (208) further comprises a database (520) wherein the control circuit (504) is further configured to execute a register function (514) configured to in the database (520) indicate the controllability of the thermal device (204).

13. The central server (208) according to claim 10 or 11, wherein the communication unit (502) is configured to communicate with a plurality of thermal devices (106) using a predetermined rule of communication;
wherein the monitoring function (510) is configured to monitor the communications between the central server (208) and the plurality of thermal devices (106);
wherein the thermal device control function (512) is configured to for each of the plurality of thermal devices (106) determine whether the communication between the central server (208) and the respective one of the plurality of thermal devices (106) fulfills the predetermined rule of communication:
upon the communication between the central server (208) and a respective one of the plurality of thermal devices (106) fulfills the predetermined rule of communication, set the respective one of the plurality of thermal devices (106) in a normal operation mode,
upon the communication between the central server (208) and the respective one of the plurality of thermal devices (106) does not fulfill the predetermined rule of communication, trigger an alarm indicating a problem with the communication between the central server (208) and the respective one of the plurality of thermal devices (106).

14. The central server (208) according to claim 13, wherein the central server (208) further comprises a database (520) wherein the control circuit (504) is further configured to execute a register function (514) configured to in the database (520) indicate the controllability of each of the plurality of thermal devices (106).

15. A method for checking controllability of a thermal device (106) connected to a distribution grid (202) for a fluid based distribution of heat and/or cold, the method comprising:
monitoring (402) a communication between a central server (208) and the thermal device (106);
upon the communication between the central server (208) and the thermal device (106) fulfills (404) a predetermined rule of communication, setting (406) the thermal device (106) in a normal operation mode,
upon the communication between the central server and the thermal device does not fulfill (404) the predetermined rule of communication, triggering (408) an alarm indicating a problem with the communication between the central server (208) and the thermal device (106).
